# EUROPEAN PATENT SPECIFICATION

(11) **EP 2 507 107 B1**
(45) Date of publication and mention of the grant of the patent: **09.10.2013**
(21) Application number: 10785421.8
(22) Date of filing: 01.12.2010
(51) Int. Cl.: B61F 9/00, B60T 7/12

(54) **DERAILMENT DETECTOR UNIT WITH EXTENDED SENSITIVITY**
ENTGLEISUNGSDETEKTOREINHEIT MIT ERHÖHTER EMPFINDLICHKEIT
UNITÉ DE DÉTECTEUR DE DÉRAILLEMENT AYANT UNE SENSIBILITÉ ÉTENDUE

(30) Priority: 04.12.2009 DE 102009056931
(43) Date of publication of application: 10.10.2012
(73) Proprietor: KNORR-BREMSE Systeme für Schienenfahrzeuge GmbH, 80809 München (DE)
(72) Inventor: OCSKÓ, Gábor, 1048 Budapest (HU)
(74) Representative: Mattusch, Gundula
(86) International application number: PCT/EP2010/068631
(87) International publication number: WO 2011/067284

(56) References cited:
- EP-A1- 1 914 134
- DE-A1- 19 544 122
- JP-A- 55 127 246

## Description

### Field of the invention

The invention relates to a derailment detector arrangement for sensing vertical acceleration peaks on a rail vehicle comprising a derailment detector unit in which a vertical movable filling mass connected in series with a compressing spring for transforming significant vertical acceleration peaks into an actuating stroke of a mechanically coupled emergency brake valve assembly for actuating a compressed air break system by venting a main brake pipe (HL), the emergency brake valve assembly is actuated via a trigger mass piston which is arranged in the derailment detector unit and which is preloaded due to vertical motion of the filling mass. Additionally, the present invention relates to a rail vehicle with a compressed air break system, which is equipped with such a derailment detector assembly.

A derailment detector unit can be used on any rail vehicle on which emergency braking can be initiated by venting the main brake pipe, especially on freight wagons transporting dangerous goods. Derailment of a rail vehicle is a rare, unique and unwanted event so immediate emergency braking must be initiated. The differences caused by the different vehicles, track and environmental conditions. Thus, specific sensor technologies are necessary. In order to reliably identify the event of derailment the vertical acceleration can be observed.

The DE 195 44 122 A1 disclosures a derailment detector unit, which is realized with mechanical-pneumatical means only. An emergency brake valve is connected to the brake pipe (HL) on the rail vehicle, which emergency brake valve is adapted to connected via a control connector to an alarm signal box for manual emergency brake application. Said emergency brake valve is combined with a derailment detector in a common housing forming an emergency brake block. The derailment detector includes a releasing mechanism, which is connected to said emergency brake valve in such a way that in the event of derailing said brake pipe of the rail vehicle will be vented via said emergency brake valve over a large cross-sectional area.

For realizing that functional integrated solution less mechanical-pneumatical parts are necessary. However, only hard acceleration peaks can be detected by the known derailment detector, since its mass-spring-system is adapted to hard peak type acceleration shocks only which could come from a high speed derailment or sudden loose of rail-wheel contact. The prior art solution ensures an immediate emergency braking in such a situation only.

However, each derailment should be handled as a unique event because the velocity, track condition and environment, sleepers or the vehicle it self is different. In order to identify the event of derailment something common attribute should be observed. This common attribute is a more or less irregular acceleration on the vehicle. Although the irregular acceleration is common in the different derailment situation but the regularity, maximal value and shape of the acceleration peaks have also different shape. In order to have a proper and accurate functional derailment detector unit an inbuilt intelligent behavior is necessary.

The document DE 101 48 482 A1 disclosers another technical solution for a derailment detector unit which uses in contrast to the forgoing discussed prior art mainly electronical means. A sensor produces an electrical signal upon detection of forces acting essentially vertically in relation to the surface on which the vehicle travels. The detected signal being supplied to a signal processing unit and producing an output signal for triggering an emergency braking. For this technical solution a voltage source is necessary in order to supply the electronical parts. However, due to the construction of freight wagons only the compressed air is available as operating medium to the derailment detector unit.

### Summary of the Invention

It is an object of the present invention to provide a derailment detector unit for sensing various vertical accelerations with different frequency and peak levels caused in different derailment situations using mechanical-pneumatical means only.

This object is achieved by the subject-matter of the independent claims. Further exemplary embodiments are evident from the dependent claims.

According to the invention an emergency brake valve assembly of a derailment detector unit is actuated via a trigger mass piston preloaded due to vertical motion of an additional filling mass, in order to form a double-mass triggering unit for the emergency brake valve assembly.

Considering the above mentioned functionality the detector unit of the present invention can be triggered by a hard peak type acceleration shock as well as lower but repeatedly occurring acceleration peaks which caused by low speed derailment or derailment at mud, gravel, soil covered sleppers. In this case the triggering limit is reached through several steps. Thus, the trigger mass piston will be loaded step by step. This integrated function ensures that the derailment detector unit is not sensitive for single mild peaks, but sensitive for those mild peaks if they occur repeatedly. Beside, the derailment detector unit of the present invention can be triggered by those hard peak type accelerations shock which are caused by a high speed derailment or sudden lose of rail-wheel contact. In this case the triggering limit is reached in one step only so the emergency braking initiation is immediate as already known from the prior art.

Thus, the derailment detector unit is suitable to sense, then trigger in case of several types of derailment situation. Sensing a shock type vertical acceleration peak triggers an immediate emergency braking to prevent more damage. With the integrated function the device can also trigger for repeatedly occurring mild vertical acceleration peaks but can avoid false triggering in case of single mild peaks. Therefore, the derailment detector unit should preferably comprise a choke bore for slowly venting the pilot controlled chamber below the trigger mass piston. Such a choke bore can be integrated in the trigger mass piston itself.

According to preferred embodiment of the invention the trigger mass piston is pilot-controlled by a filling mass valve seat operated by the filling mass, in order to add up the pilot pressure impulses caused by different frequency and peak levels of mild but significant vertical accelerations on the rail vehicle. When the acceleration coming from mild but repeatedly occurring peaks its higher then the set triggering value the mass force of the filling mass overcomes an spring force of a corresponding compression spring and the filling mass valve seat opens for a period of time. During the opened state the pressure gets into a chamber under the trigger mass piston. The pressure is vented slowly through the foregoing mentioned choke bore. When more compressed air is let through the filling mass valve seat then the air which is vented through said choke bore, pressure in the chamber below the trigger mass starts to increase. When the pressure in the chamber can overcome the spring force of the compression spring of the trigger mass piston and its mass force the trigger mass piston starts to move to its upper dead end position.

According to another preferred aspect of the invention the emergency brake valve assembly is designed as a balance-valve comprising a sealing element for a main valve seat and a compression spring for holding the sealing element in the closed valve position onto the main valve seat. This balance-valve has a double, simultaneously operated valve seat. One opens the main break pipe (HL), the other opens said counter chamber. Therefore, the balance-valve comprises a further valve seat which is simultaneously actuated with the main valve seat for opening the counter chamber in order to keep the balance-valve in the opened position once that is opened. Preferably the main valve seat is operated by pushrod in order to achieve compact design. When the main valve seat is opened by the pushrod, which is provided as a part of the triggering mass, the valve seat of the main valve actuating piston will by also opened. Till the pressure in the chamber below the main valve actuating piston can overcome the spring force of its compression spring the main valve will be kept in opened state and vent the main brake pipe (HL) and initiate an emergency braking.

When the hard peak type acceleration shock is higher then the set triggering value, that means high triggering acceleration, the mass force of the trigger mass piston should preferably overcome the spring force of the compression spring of the trigger mass piston in order to start the movement of the trigger mass to its upper dead end position.

According to a preferred embodiment of the invention the movable parts, especially the above mentioned filling mass, the filling mass compression spring, the trigger mass piston, the trigger mass compression spring, the main valve actuating piston and the main valve compression spring are coaxially arranged one to another inside a common housing. That special construction ensures a compact design.

These and other aspects of the invention will become apparent from with reference to the preferred embodiment described therein after.

### Description of the drawings

- Figure 1: shows a schematic side view to a waggon of a rail vehicle with a compressed air break system, and
- Figure 2: shows a longitudinal section of a derailment detector unit according to the invention.

The reference symbols used in the drawings, and there meanings, are listened in summery form in the list of reference symbols. In principal, identically parts are provided with the same reference symbols in the figures. All the figures are schematic.

### Detailed description of the preferred embodiment

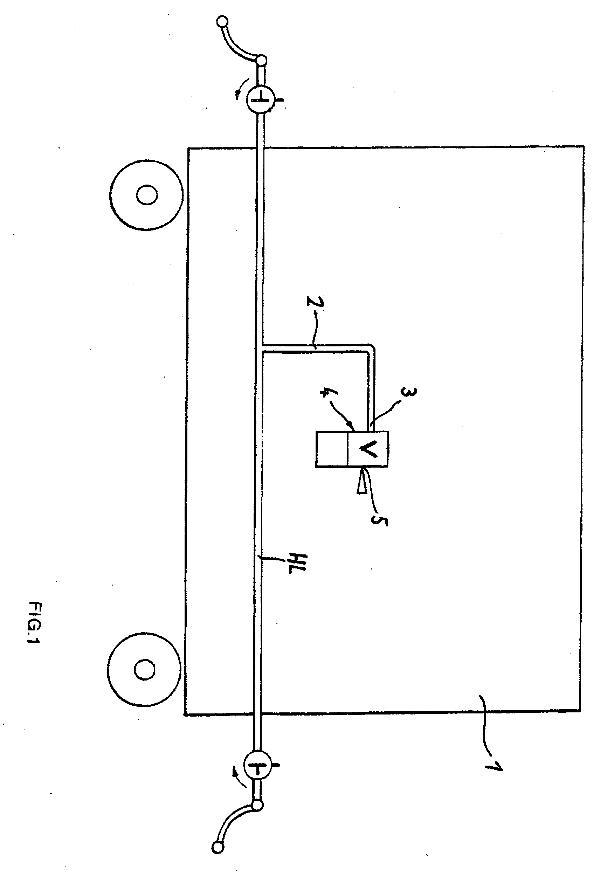

Figure 1 shows a waggon 1 of a rail vehicle. A main break pipe HL of a not further shown compressed air break system runs from one end of the waggon to its other end. A branch conduit 2 connects the main break pipe HL of the compressed air brake system to an inlet port 3 of a derailment detector unit 4. The derailment detector unit 4 senses defined vertical acceleration peaks on the rail vehicle in order to transform them into an actuation stroke of the emergency brake valve assembly for actuating the compressed air brake system by venting the main break pipe HL via a venting port 5 of the derailment detector unit 4.

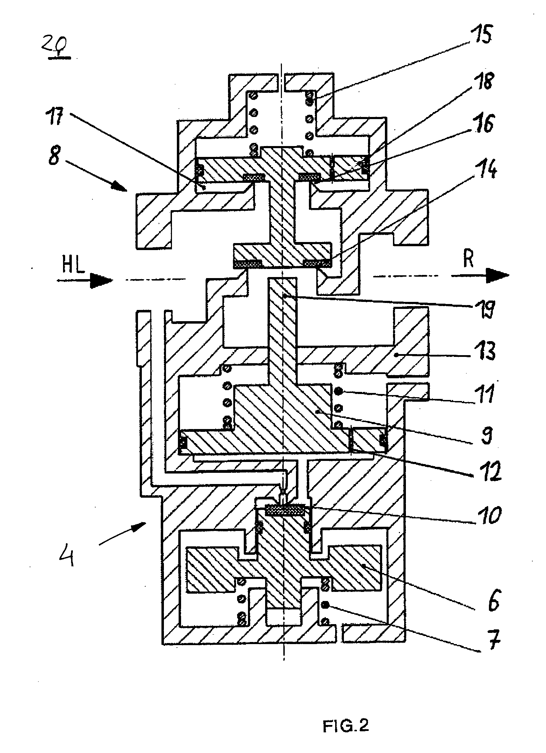

With reference to Figure 2 the derailment detector unit 4 comprises a vertical movable filling mass 6 which is connected in series with a compression spring 7. This mass-spring-assembly transforms significant vertical acceleration peaks into an actuation stroke of a mechanically coupled emergency brake valve assembly 8 for actuating the compressed air brake system by venting the main brake pipe HL.

The emergency brake valve assembly 8 is actuated via a trigger mass piston 9 which is pilot-controlled by a filling mass valve seat 10 operated by the filling mass 6. A significant vertical motion of the filling mass 6 add up the pilot pressure impulses caused by different frequency and peak levels. Thus, the trigger mass piston 9 and the filling mass 6 form a double-mass triggering unit for the emergency brake valve assembly 8.

The mass force of the trigger mass piston 9 overcomes the spring force of the trigger mass piston's 9 compression spring if the hard peak type acceleration shock is higher than the set triggering value, in order to start moving of the trigger mass piston 9 to its upper dead end position. In order to eliminate very mild strokes which are not significant the trigger mass piston 9 comprises a choke bore 12 for slowly venting the pilot-controlled chamber below the trigger mass piston 9.

The forgoing described movable parts are integrated into a common housing 13 together with the emergency brake valve assembly 8. The emergency brake valve assembly 8 is designed as a balance-valve comprising a sealing element for a main valve seat 14 and a compression spring 15 for holding the sealing element in the closed valve position onto the main valve seat 14. The balance-valve comprises a further valve seat 16 simultaneously actuated with the main valve seat 14 for opening a counter chamber 17 in order to keep the balance-valve in the opened position once that is opened. The main valve seat 14 is opened as long as the pressure in the chamber 17 below the main valve actuating piston 18 overcome a reverse force generated by the compression spring 15. The main valve seat 14 is operated by a pushrod 19 which is molded as an extension section on the trigger mass piston 9. The pushrod 19 extends coaxially through the main valve seat 14.

The derailment detector 4 is able to handle hard peak type acceleration shock which could come from high speed derailment or sudden lose of rail-wheel contact. In this case, the triggering pressure is reached in one step. The derailment detector 4 is also sensible for lower but repeatedly occurring acceleration peaks which could come from low speed derailment. In this case the triggering pressure is reached through several steps. This integrated functionality ensures that the derailment detector 4 according to the present invention is not sensible for single mild peaks only, but sensible for those mild peaks, if they occur repeatedly.

When the mild but repeatedly occurring vertical acceleration peaks are higher than the set triggering value the mass force for the filling mass 6 overcomes the spring force of its compression spring 7 and the filling valve seat 10 opens for a period of time in order to pilot-control the chamber under the trigger mass piston 9. When more compressed air is let through the filling mass valve seat 10 than the air which is vented through the choke bore 12 the pressure in the chamber below the trigger mass piston 9 starts to increase. When the pressure in said chamber can overcome the spring force of the compression spring 11 of the trigger mass piston 9 and die mass force of the trigger mass piston 9 and starts to move the trigger mass piston 9 to its upper dead end position in order to actuate the emergency brake valve assembly 8 for initiating an emergency braking.

While the invention has been illustrated and described in detail in the drawings and forgoing description, such illustration and description are to be considered illustrative or exemplary; the invention is not limited to the disclosed embodiment. Other variations to the embodiment can be understood and faced by those skilled in the art and practicing the claim invention, from study of the drawings, disclosure and the appended claims.

### Reference signs

- 1: Wagon
- 2: branch conduit
- 3: inlet port
- 4: derailment detector unit
- 5: venting port
- 6: filling mass
- 7: compression spring
- 8: emergency brake valve assembly
- 9: trigger mass piston
- 10: filling mass valve seat
- 11: compression spring
- 12: choke bore
- 13: housing
- 14: main valve seat
- 15: compression spring
- 16: valve seat
- 17: counter chamber
- 18: main valve actuating piston
- 19: pushrod

- HL: main break pipe
- R: venting

## Claims

1. Derailment detector arrangement (20) for sensing vertical acceleration peaks on a rail vehicle comprising a derailment detector unit (4) in which a vertical movable filling mass (6) connected in series with a compression spring (7) for transforming significant vertical acceleration peaks into an actuation stroke of a mechanically coupled emergency brake valve assembly (8) for actuating a compressed air brake system by venting a main break pipe (HL), and an emergency brake valve assembly (8) wherein the emergency brake valve assembly is actuated via a trigger mass piston (9) which is arranged in the derailment detector unit (4) and which is preloaded due to vertical motion of the filling mass (6) **characterized in that** in case of hard peak type acceleration shock higher than a set triggering value a mass force of the trigger mass piston (9) overcomes a spring force of a compression spring (11) allocated to the trigger mass piston (9) for actuating the emergency brake valve assembly (8), in order to form a double-mass triggering unit for the emergency brake valve assembly (8).

2. Derailment detector arrangement (20) according to Claim 1,
**characterized in that** the trigger mass piston (9) is pilot-controlled by a filling mass valve seat (10) operated by the filling mass (6), in order to add up the pilot pressure impulses caused by different frequency and peak levels of significant vertical accelerations on the rail vehicle.

3. Derailment detector arrangement (20) according to Claim 1,
**characterized in that** the emergency brake valve assembly (8) is designed as a balance-valve comprising a sealing element for a main valve seat (14) and a compression spring (15) for holding the sealing element in the closed valve position onto the main valve seat (14).

4. Derailment detector arrangement (20) according to Claim 3,
**characterized in that** the balance-valve comprises a further valve seat (16) simultaneously actuated with the main valve seat (14) for opening a counter chamber (17) in order to keep the balance-valve in the opened position once that is opened.

5. Derailment detector arrangement (20) to Claim 3,
**characterized in that** the main valve seat (14) is operated by a pushrod (19) of the trigger mass piston (9) extending through the main valve seat (14).

6. Derailment detector arrangement (20) according to Claim 3,
**characterized in that** the main valve seat (14) is opened as long as the pressure in a chamber below the main valve actuating piston (18) overcome a reverse force generated by at least one compression spring (15).

7. Derailment detector arrangement (20) according to Claim 2,
**characterized in that** a choke bore (12) for slowly venting the pilot-controlled chamber below the trigger mass piston (9) is provided.

8. Derailment detector arrangement (20) according to Claim 1,
**characterized in that** the mass force of the trigger mass piston (9) overcomes the spring force of the trigger mass piston's (9) compression spring (11) if the hard peak type acceleration shock is higher than the set triggering value, in order to start moving of the trigger mass piston (9) to its upper dead end position.

9. Derailment detector arrangement (20) according to at least one of the preceding Claims,
**characterized in that** all movable parts: filling mass (6), filling mass compression spring (7), trigger mass piston (9), trigger mass compression spring (11), main valve actuating piston (18) and main valve compression spring (15) are coaxially arranged one to another inside a common housing (13).

10. Rail vehicle with a compressed air brake system controlled by venting a main break pipe (HL), comprising a emergency brake valve assembly,
**characterized by** a derailment detector arrangement (20) according to at least one of the preceding Claims.

## Patentansprüche

1. Entgleisungsdetektoreinheit (20) zum Erfassen von Beschleunigungsspitzen in vertikaler Richtung an einem Schienenfahrzeug, welche einen Entgleisungsdetektor (4) aufweist, in welchem eine vertikale bewegliche Füllmasse (6) in Reihe mit einer Druckfeder (7) zum Umwandeln von erheblichen Beschleunigungsspitzen in vertikaler Richtung in einen Betätigungshub eines mechanisch gekoppelten Notbremsventilmoduls (8) verbunden ist, das zur Betätigung einer Druckluftbremsanlage durch Belüften einer Hauptbremsleitung (HL) dient, und bei welcher das Notbremsventilmodul (8) über einen Auslösemassekolben (9) betätigt wird, welcher in dem Entgleisungsdetektor (4) angeordnet ist, und infolge einer vertikalen Bewegung der Füllmasse vorbelastet ist, **dadurch gekennzeichnet, dass** im Falle eines starken spitzenartigen Beschleunigungsstoßes, der stärker ist als ein eingestellter Auslösewert, eine Massenkraft des Auslösemassekolbens (9) eine Federkraft einer Druckfeder (11) überwindet, welche dem Auslösemassekolben (9) zur Betätigung des Notbremsventilmoduls (8) zugeordnet ist, um so eine Auslöseeinheit mit doppelter Masse für das Notbremsventilmodul (8) zu bilden.

2. Entgleisungsdetektoreinheit (20) nach Anspruch 1,
**dadurch gekennzeichnet, dass** der Auslösemassekolben (9) von einem Füllmassen-Ventilsitz (10) vorsteuerbar ist, der durch die Füllmasse (6) betätigbar ist, um so die durch die unterschiedlichen Frequenz- und Spitzenhöhen erheblicher Beschleunigungen in vertikaler Richtung an dem Schienenfahrzeug verursachten Vorsteuer-Druckimpulse zu addieren.

3. Entgleisungsdetektoreinheit (20) nach Anspruch 1,
**dadurch gekennzeichnet, dass** das Notbremsventilmodul (8) als Ausgleichsventil ausgelegt ist, das ein Dichtelement für einen Hauptventilsitz (14) und eine Druckfeder (15) aufweist, um das Dichtelemen bei Schließstellung des Ventils auf dem Hauptventilsitz (14) zu halten.

4. Entgleisungsdetektoreinheit (20) nach Anspruch 3,
**dadurch gekennzeichnet, dass** das Ausgleichsventil einen weiteren Ventilsitz (16) aufweist, der gleichzeitig mit dem Hauptventilsitz (14) zum Öffnen einer Gegenkammer (17) betätigbar ist, um das Ausgleichsventil in der geöffneten Stellung zu halten, sobald es geöffnet ist.

5. Entgleisungsdetektoreinheit (20) nach Anspruch 3,
**dadurch gekennzeichnet, dass** der Hauptventilsitz (14) von einer Schubstange (19) des Auslösemassenkolbens (9) betätigbar ist, die sich durch den Hauptventilsitz (14) erstreckt.

6. Entgleisungsdetektoreinheit (20) nach Anspruch 3,
**dadurch gekennzeichnet, dass** der Hauptventilsitz (14) geöffnet ist, solange der Druck in einer Kammer unter dem Kolben (18) zur Betätigung des Hauptventils eine Kraft in Gegenstromrichtung überwindet, welche von mindestens einer Druckfeder (15) erzeugt wird.

7. Entgleisungsdetektoreinheit (20) nach Anspruch 2,
**dadurch gekennzeichnet, dass** eine Drosselbohrung (12) zum langsamen Entlüften der vorgesteuerten Kammer unterhalb des Auslösemassekolbens (9) vorgesehen ist.

8. Entgleisungsdetektoreinheit (20) nach Anspruch 1,
**dadurch gekennzeichnet, dass** die Massenkraft des Auslösemassekolbens (9) die Federkraft der Druckfeder (11) des Auslösemassekolbens (9) überwindet, wenn der starke spitzenartige Beschleunigungsstoß stärker ist als der eingestellte Auslösewert, um die Bewegung des Auslösemassekolbens (9) in seine obere Totpunkt-Endstellung einzuleiten.

9. Entgleisungsdetektoreinheit (20) nach mindestens einem der vorhergehenden Ansprüche,
**dadurch gekennzeichnet, dass** alle beweglichen Teile, nämlich die Füllmasse (6), die Füllmasse-Druckfeder (7), der Füllmassekolben (9), die Auslösemasse-Druckfeder (11), der Kolben (18) zur Betätigung des Hauptventils und die Hauptventil-Druckfeder (15) koaxial zueinander im Inneren eines gemeinsamen Gehäuses (13) angeordnet sind.

10. Schienenfahrzeug mit einer Druckluftbremsanlage, die mittels Belüftung einer Hauptbremsleitung (HL) gesteuert wird, welches ein Notbremsventilmodul umfasst,
**gekennzeichnet durch** eine Entgleisungsdetektoreinheit (20) nach mindestens einem der vorhergehenden Ansprüche.

## Revendications

1. Agencement (20) de détecteur de déraillement pour détecter des pics d'accélération verticale sur un véhicule sur rail, comprenant une unité (4) de détecteur de déraillement, dans laquelle une masselotte (6) de remplissage mobile verticalement est montée en série avec un ressort (7) de compression, pour transformer des pics significatifs d'accélération verticale en une course d'actionnement d'un ensemble (8) de vanne de frein de secours couplé mécaniquement, pour actionner un système de frein à air comprimé en mettant à l'atmosphère un conduit (HL) principal d'interruption, et un ensemble (8) de vanne de frein de secours, dans lequel l'ensemble de vanne de frein de secours est actionné par un piston (9) à masselotte de déclenchement, qui est monté dans l'unité (4) de détecteur de déraillement et qui est préchargé en raison du mouvement vertical de la masselotte (6) de remplissage, **caractérisé en ce que**, dans le cas d'un choc dur d'accélération de type pic plus grand qu'une valeur de déclenchement fixée, une force de masselotte du piston (9) à masselotte de déclenchement surmonte une force d'un ressort (11) de compression allouée au piston (9) à masselotte de déclenchement, pour actionner l'ensemble de vanne de frein de secours, afin de former une unité de déclenchement à double masselotte pour l'ensemble (8) de vanne de frein de secours.

2. Agencement (20) de détecteur de déraillement suivant la revendication 1,
**caractérisé en ce que** le piston (9) à masselotte de déclenchement est commandé en pilote par un siège (10) de vanne de masselotte de remplissage, qui fonctionne par la masselotte (6) de remplissage, afin d'ajouter les impulsions de pression pilote provoquées par des niveaux de fréquence et de pic différents d'accélérations verticales significatives du véhicule sur rail.

3. Agencement (20) de détecteur de déraillement suivant la revendication 1,
**caractérisé en ce que** l'ensemble (8) de vanne de frein de secours est conçu sous la forme d'une vanne d'équilibrage, comprenant un élément d'étanchéité, pour un siège (14) de vanne principal, et un ressort (15) de compression, pour maintenir l'élément d'étanchéité en la position fermée de la vanne sur le siège (14) de vanne principal.

4. Agencement (20) de détecteur de déraillement suivant la revendication 3,
**caractérisé en ce que** la vanne d'équilibrage comprend un autre siège (16) de vanne, actionné simultanément avec le siège (14) de vanne principal, pour ouvrir une chambre (17) antagoniste, afin de maintenir la vanne d'équilibrage en la position ouverte une fois qu'elle l'a été.

5. Agencement (20) de détecteur de déraillement suivant la revendication 3,
**caractérisé en ce que** le siège (14) de vanne principal est mis en fonctionnement par un poussoir (19) du piston (9) à masselotte de déclenchement traversant le siège (14) de vanne principal.

6. Agencement (20) de détecteur de déraillement suivant la revendication 3,
**caractérisé en ce que** le siège (14) de vanne principal est ouvert tant que la pression dans la chambre en dessous du piston (18) principal actionnant la vanne surmonte une force antagoniste produite par au moins un ressort (15) de compression.

7. Agencement (20) de détecteur de déraillement suivant la revendication 2,
**caractérisé en ce qu'**il est prévu un trou (12) d'étranglement, pour mettre à l'atmosphère lentement la chambre à commande par pilote en dessous du piston (9) à masselotte de déclenchement.

8. Agencement (20) de détecteur de déraillement suivant la revendication 1,
**caractérisé en ce que** la force de masselotte du piston (9) à masselotte de déclenchement surmonte la force du ressort (11) de compression du piston (9) à masselotte de déclenchement, si le choc dur d'accélération de type pic est plus grand que la valeur de déclenchement fixée, afin de faire commencer le mouvement du piston (9) à masselotte de déclenchement vers sa position de point mort supérieur.

9. Agencement (20) de détecteur de déraillement suivant au moins l'une des revendications précédentes,
**caractérisé en ce que** toutes les parties mobiles : masselotte (6) de remplissage, ressort (7) de compression à masselotte de remplissage, piston (9) à masselotte de déclenchement, ressort (11) de compression à masselotte de déclenchement, piston (18) principal d'actionnement de la vanne et ressort (15) principal de compression de la vanne sont disposées coaxialement l'une à côté de l'autre à l'intérieur d'une enveloppe (13) commune.

10. Véhicule sur rail ayant un système de frein à air comprimé commandé par une mise à l'atmosphère d'un conduit (HL) principal d'interruption, comprenant un ensemble de vanne de frein de secours,
**caractérisé par** un agencement (20) de détecteur de déraillement suivant l'une au moins des revendications précédentes.
